(19) Europäisches Patentamt
European Patent Office
Office européen des brevets

(11) EP 1 919 012 A1

(12) EUROPEAN PATENT APPLICATION
published in accordance with Art. 153(4) EPC

(43) Date of publication:
07.05.2008 Bulletin 2008/19

(51) Int Cl.:
H01M 4/06 (2006.01)       H01M 4/52 (2006.01)
H01M 4/62 (2006.01)       H01M 6/08 (2006.01)

(21) Application number: 06783027.3

(22) Date of filing: 25.08.2006

(86) International application number:
PCT/JP2006/316681

(87) International publication number:
WO 2007/023933 (01.03.2007 Gazette 2007/09)

(84) Designated Contracting States:
AT BE BG CH CY CZ DE DK EE ES FI FR GB GR
HU IE IS IT LI LT LU LV MC NL PL PT RO SE SI
SK TR

(30) Priority: 26.08.2005 JP 2005245615

(71) Applicant: MATSUSHITA ELECTRIC INDUSTRIAL
CO., LTD.
Osaka 571-8501 (JP)

(72) Inventors:
• FUJIWARA, Michiko,
c/o Matsushita Electric Industrial Co., Ltd.
2-1-61 Shiromi, Chuo-ku, Osaka 540-6207 (JP)

• OKADA, Tadaya,
c/o Matsushita Electric Industrial Co., Ltd.
2-1-61 Shiromi, Chuo-ku, Osaka 540-6207 (JP)
• MUKAI, Yasuo,
c/o Matsushita Electric Industrial Co., Ltd.
2-1-61 Shiromi, Chuo-ku, Osaka 540-6207 (JP)
• IZUMI, Hidekatsu,
c/o Matsushita Electric Industrial Co., Ltd.
2-1-61 Shiromi, Chuo-ku, Osaka 540-6207 (JP)
• NOYA, Shigeto,
c/o Matsushita Electric Industrial Co., Ltd.
2-1-61 Shiromi, Chuo-ku, Osaka 540-6207 (JP)

(74) Representative: TBK-Patent
Bavariaring 4-6
80336 München (DE)

(54) ALKALINE DRY BATTERY

(57) In order to provide an alkaline dry battery which enables to improve the operational stability of digital equipment by suppressing the progress of polarization during heavy load pulse discharge while maintaining the excellent heavy load discharge characteristics, and has an excellent reliability in terms of the leakage resistance and the safety under short-circuit conditions, the alkaline dry battery includes a positive electrode including a nickel oxyhydroxide powder and a manganese dioxide powder as positive electrode active materials, and including graphite as a conductive material; a negative electrode including zinc or a zinc alloy as a negative electrode active material; a separator interposed between the positive electrode and the negative electrode; a negative electrode current collector inserted in the negative electrode; an aqueous alkaline solution included in the separator; a battery case housing the positive electrode, the negative electrode, the separator, the negative electrode current collector and the aqueous alkaline solution; a sealing member for sealing an opening of the battery case, wherein the positive electrode includes a calcium compound in an amount of 0.1 to 10 mol% relative to a total amount of the positive electrode active material, and the content of iron element in the calcium compound is 150 ppm or less.

FIG.1

**Description**

Technical Field

The present invention relates to alkaline dry batteries including a nickel oxyhydroxide powder and a manganese dioxide powder as positive electrode active materials.

Background Art

Alkaline batteries have an inside-out structure, in which a hollow cylindrical positive electrode material mixture is disposed in a positive electrode case also serving as a positive electrode terminal so as to be in close contact with the positive electrode case, and a gelled negative electrode is disposed in the hollow of the positive electrode material mixture with a separator interposed therebetween. With widespread use of digital equipment in recent years, the load power of equipment for which these batteries are used has been gradually increasing. Under such circumstances, batteries excellent in heavy load discharge performance have been demanded. To meet this demand, Patent Document 1 proposes mixing a nickel oxyhydroxide powder to the positive electrode active material. Alkaline dry batteries including a nickel oxyhydroxide powder as the positive electrode active material are excellent in heavy load discharge characteristics, compared with the conventional alkaline dry batteries, and hence, are increasingly popular as a main power supply for digital equipment represented by digital cameras.

In the alkaline dry batteries in which a nickel oxyhydroxide powder is included in the positive electrode active material, as a result of high temperature storage, the resistance between the positive electrode case and the positive electrode material mixture increases, and moreover, the amount of dischargeable positive electrode active material decreases. For this reason, disadvantageously, the heavy load discharge characteristics after high temperature storage have been inferior to those of alkaline dry batteries not including nickel oxyhydroxide. As a solution to this, Patent Document 2 proposes adding a zinc oxide and a calcium oxide to the positive electrode material mixture.

Patent Document 1: Japanese Laid-Open Patent Publication No. 2000-48827

Patent Document 2: Japanese Laid-Open Patent Publication No. 2001-15106

Disclosure of the Invention

Problem To be Solved by the Invention

In digital equipment using alkaline dry batteries as a power supply, for example, in digital cameras, heavy load power is instantaneously required depending on their various functions such as stroboscopic flash, optical lens zoom, display on a liquid crystal display and write of image data to a recording medium. In the alkaline dry batteries including nickel oxyhydroxide, nickel hydroxide to act as an insulator is produced in association with discharge. Therefore, polarization proceeds greatly in the final stage of a heavy load pulse discharge. In other words, as the discharge of battery proceeds, a case may occur where heavy load power cannot be supplied instantaneously. The polarization that has proceeded greatly results in a degraded operational stability such as a sudden shut-down of the power supply for a digital camera.

Moreover, a calcium compound contains a large amount of impurities such as iron element. The impurities accelerate corrosion of a zinc alloy serving as a negative electrode active material of battery. Adding a calcium oxide to the positive electrode material mixture as proposed in Patent Document 2 has a problem in that the leakage resistance during long term storage at room temperature is degraded, the battery temperature rises when the battery becomes short-circuited, or the like.

In light of the conventional problems as described above, the present invention intends to obtain excellent discharge characteristics while maintaining the excellent heavy load discharge characteristics of the alkaline dry batteries including nickel oxyhydroxide and manganese dioxide as the positive electrode active material. Specifically, the present invention intends to provide an alkaline dry battery which enables to improve the operational stability of digital equipment by suppressing the progress of polarization during heavy load pulse discharge and improve the heavy load discharge characteristics after high temperature storage, and an excellent reliability in terms of the leakage resistance and the battery safety under short-circuit conditions.

Means for Solving the Problem

To solve the problems as described above, the present invention provides an alkaline (primary) dry battery including: a positive electrode including a nickel oxyhydroxide powder and a manganese dioxide powder as positive electrode active materials, and including graphite as a conductive material; a negative electrode including zinc or a zinc alloy as a negative electrode active material; a separator interposed between the positive electrode and the negative electrode; a negative electrode current collector inserted in the negative electrode; an aqueous alkaline solution included in the separator; a battery case housing the positive electrode, the negative electrode, the separator, the negative electrode current collector and the aqueous alkaline solution; a sealing member for sealing an opening of the battery case, wherein the positive electrode includes a calcium compound in an amount of 0.1 to 10 mol% relative to a total amount of the positive electrode active material, and the content of iron element in the calcium compound is 150 ppm or less.

The inclusion of a calcium compound in the positive electrode in such a manner as described above makes it possible to maintain heavy load discharge characteristics after high temperature storage of the alkaline dry battery. Moreover, the inclusion of iron element in the calcium compound in an amount of 150 ppm or less makes it possible to improve the leakage resistance and the battery safety under short-circuit conditions.

It is preferable that the calcium compound is a calcium oxide or calcium hydroxide.
It is preferable that the nickel oxyhydroxide powder has a mean nickel valence of 2.95 or more. It is further preferable that the mean particle size is 8 to 18 $\mu$m.

It is preferable that the weight ratio between the nickel oxyhydroxide powder and the manganese dioxide powder is 20:80 to 90:10. It is further preferable that the weight ratio is 20:80 to 60:40.

It is preferable that the nickel oxyhydroxide powder is a powder obtained by oxidizing a nickel hydroxide powder having a half-width of 0.6 to 0.8 deg./$2\theta$ of the (101) plane and a half-width of 0.5 to 0.7 deg./$2\theta$ of the (001) plane in powder X-ray diffraction.

Effect of the present invention

According to the present invention, it is possible to obtain excellent discharge characteristics while maintaining the heavy load discharge characteristics of an alkaline dry battery including nickel oxyhydroxide and manganese dioxide as positive electrode active materials. Specifically, it is possible to provide an alkaline dry battery which enables to improve the operational stability of digital equipment by suppressing the progress of polarization during heavy load pulse discharge of battery and improve the heavy load discharge characteristics after high temperature storage, and has an excellent reliability in terms of the leakage resistance and the safety under short-circuit conditions.

Brief Description of the Drawings

[FIG. 1] A partially sectional front view of an alkaline dry battery according to Example of the present invention.
[FIG. 2] A powder X-ray diffraction pattern of a nickel hydroxide powder.

Best Mode for Carrying Out the Invention

The present invention is directed to an alkaline dry battery containing nickel oxyhydroxide and having excellent heavy load discharge characteristics, in which a calcium compound is added to the positive electrode, and the content of iron element that is an impurity contained in the calcium compound is reduced, so that the heavy load discharge characteristics after high temperature storage, the leakage resistance and the battery safety under short-circuit conditions are improved.

When the content of calcium compound (for example, calcium oxide or calcium hydroxide) with respect to the positive electrode is less than 0.1 mol% relative to a total amount of the positive electrode active material, the heavy load discharge characteristics after high temperature storage cannot be improved. On the other hand, when it exceeds 10 mol%, the proportion of the positive electrode active material in the positive electrode material mixture is reduced, and thus a desired battery capacity cannot be obtained.
Moreover, among calcium compounds, oxides or hydroxides can be obtained from, for example, naturally present limestone. Although depending on the degree of refinement in the production process, a calcium compound contains a large amount of inevitable impurities such as iron element. The iron element included as an impurity accelerates corrosion of a zinc alloy powder serving as a negative electrode active material of an alkaline dry battery. When the content of iron element in the calcium compound is 150 ppm or less, the leakage resistance and the battery safety under short-circuit conditions can be improved. The smaller the content of ion element is, the more preferable it is; however, it may be 1 to 50 ppm.

The content of iron element contained in the calcium compound can be measured, for example, in the following manner. First, a calcium compound, water and hydrochloric acid in an amount, for example, twice or more as much as an equivalent amount thereof are mixed and heated until the calcium compound is dissolved. If no insoluble component is observed, the mixture without further treatment is brought to a constant volume as appropriate, to be used as a measurement sample. If an insoluble component is observed, the insoluble component is filtered off and the filtrate is brought to a constant volume, to be used as a measurement sample.

Next, the Fe concentration in the measurement sample is measured by ICP emission spectrometry or atomic absorption spectrometry. For the measuring method, a calibration-curve method with matrix (concentrations of hydrochloric acid and calcium) matched standards or a standard addition method is used. In either method, the requirements such as the selection of a measurement wavelength and the dilution degree of a sample must be set depending on an apparatus to be used. For a standard sample of Fe, a sample whose traceablity can be confirmed must be used. The measured Fe concentration, the volume of measurement sample and the amount of calcium compound are used to determine the content of iron element in the calcium compound.

It is preferable that the foregoing calcium compound is a calcium oxide or calcium hydroxide. The calcium oxide may be obtained, for example, in the following manner. For a starting material, for example, a natural limestone (calcium carbonate) whose iron element content is 110 ppm or less may be used. The limestone is placed in a baking oven, and baked at a temperature, for example, of approximately 1000°C using, for example, a heat source such as heavy oil, gas, coal or electricity, to remove the carbonate ion, whereby calcium oxide can be obtained.

The calcium hydroxide may be obtained by supplying a specific amount of calcium oxide and pure water, for example, into a slaking machine, in which they are mixed and stirred to slake (hydrate) the calcium oxide. The calcium hydroxide discharged from the slaking machine is supplied into an aging machine. The calcium hydroxide passed through the aging machine is discharged therefrom in a state such that the unevenness of slaking is eliminated and moisture is evenly attached. The content of water for slaking is adjusted so that the excess moisture is evaporated and most of the moisture contained in the calcium hydroxide is removed during this process.

Although dependent on the content of iron element in the natural limestone used as the starting material, the content of iron element in the calcium compound (calcium oxide or calcium hydroxide) can be controlled by the foregoing operations. The foregoing operations may be performed repeatedly.

It is preferable that the nickel oxyhydroxide powder has a mean nickel valence of 2.95 or more. In the case where the nickel oxyhydroxide is prepared by using nickel hydroxide, if the mean nickel valence of the resultant nickel oxyhydroxide is 2.95 or more, as a result, the proportion of the nickel hydroxide included in the positive electrode active material becomes small. In the resultant positive electrode active material, when the content of nickel hydroxide being a residual substance is small, the improvement in the heavy load discharge characteristics by virtue of the inclusion of nickel oxyhydroxide is not easily inhibited. In particular, the mean nickel valence of the nickel oxyhydroxide powder of 3.00 to 3.05 is preferable because the content of nickel hydroxide in the positive electrode active material is further reduced, and thus the discharge characteristics of battery is stabilized and the variation is reduced.

In the present invention, the positive electrode active material includes nickel oxyhydroxide and manganese dioxide. The nickel oxyhydroxide may be obtained, for example, by adding a nickel hydroxide powder to an aqueous sodium hydroxide solution, then adding a sufficient amount of aqueous sodium hypochlorite solution thereto and stirring them. The mean nickel valence of the nickel oxyhydroxide is dependent, for example, on the added amount of sodium hypochlorite in the process of preparing the nickel oxyhydroxide.

The mean nickel valence of the nickel oxyhydroxide is measured, for example, in the following manner. The weight ratio of nickel in the nickel oxyhydroxide is determined by a gravimetric method (dimethylglyoxime method). In addition, the amount of nickel ions is determined by dissolving the nickel oxyhydroxide powder, for example, in nitric acid to perform an oxidation-reduction titration. From the amount of nickel ions and the weight ratio of nickel determined in the foregoing manner, the mean nickel valence of a solid solution of the nickel oxyhydroxide can be determined.

It is preferable that the nickel oxyhydroxide powder has a mean particle size of 8 to 18 $\mu$m. When the mean particle size is 8 $\mu$m or more, an improved filling property of the positive electrode material mixture and favorable discharge characteristics can be obtained. Further, when 18 um or less, the contact with graphite particles serving as a conductive material is improved, and thus favorable heavy load discharge characteristics in the initial state and after high temperature storage can be obtained.

It is preferable that the weight ratio between the nickel oxyhydroxide powder and the manganese dioxide powder is 20:80 to 90:10 because the discharge characteristics in the initial state and after high temperature storage and the heavy load pulse characteristics can be improved, and the increase in temperature in the event of a battery short-circuit can be suppressed. In particular, the weight ratio of 20:80 to 60:40 is preferable because more preferable effects can be obtained.

The nickel oxyhydroxide in the present invention may be a solid solution containing other additional elements as long as the effects of the present invention are not impaired. When the atoms possibly contained in the nickel oxyhydroxide are denoted by M, the solid solution of nickel oxyhydroxide containing Atom M means a solid solution in which the foregoing Atom M is included in the interior of the crystal of nickel oxyhydroxide. Specifically, it may be either one of a solid solution in which at least a part of nickel atoms are replaced with Atom M in the interior of the crystal of nickel oxyhydroxide, and a solid solution in which Atom M is inserted into the interior of the crystal of nickel oxyhydroxide.

As a matter of course, the foregoing solid solution may contain both the replaced Atom M and the inserted Atom M. Here, the foregoing M is exemplified by manganese, cobalt, zinc and the like.

As for the nickel hydroxide powder to be used for preparing nickel oxyhydroxide, a nickel hydroxide powder having a half-width of 0.6 to 0.8 deg./2θ of the (101) plane and a half-width of 0.5 to 0.7 deg./2θ of the (001) plane in powder X-ray diffraction is preferable. The half-width of 0.6 deg./2θ or more of the (101) plane of the nickel hydroxide powder facilitates the oxidation by sodium hypochlorite etc., and reduces the proportion of the nickel hydroxide contained as a residual substance in the process of preparing nickel oxyhydroxide from the nickel hydroxide powder. As a result, excellent heavy load discharge characteristics can be obtained for the reasons as described above. In addition, the half-width of 0.8 deg./2θ or less of the (101) plane of the nickel hydroxide powder increases the crystalline size of a nickel oxyhydroxide powder obtained from the nickel hydroxide powder. This makes the formation of a nickel hydroxide layer as a product of discharge over the entire crystal surface difficult during heavy load pulse discharge. As a result, the progress of polarization during heavy load pulse discharge can be suppressed.

The half-width of 0.5 deg./2θ or more of the (001) plane of the nickel hydroxide powder makes it easy to prepare a nickel oxyhydroxide powder having a particle size of 8 μm or more. As a result, favorable discharge characteristics can be obtained for the reasons as described above. In addition, the half-width of 0.7 deg./2θ or less of the (001) plane of the nickel hydroxide powder improves the adhesion with graphite etc. in the positive electrode material mixture. As a result, in particular, the heavy load discharge characteristics of battery after storage are improved.

The nickel hydroxide powder may be obtained, for example, in the following manner. First, an aqueous nickel sulfate solution, an aqueous sodium hydroxide solution and an aqueous ammonia are mixed together in a reactor to prepare a suspension. From this suspension, the precipitate is separated by decantation. The suspension is subjected to alkaline treatment using an aqueous sodium hydroxide solution of pH 13 to 14, then washed with water and dried, whereby a nickel hydroxide powder is obtained.

The mean particle size of the nickel hydroxide powder is dependent, for example, on the flow rate of the nickel sulfate, the aqueous sodium hydroxide solution and the aqueous ammonia. Further, the half-widths of the (101) plane and (001) plane of the nickel hydroxide is dependent, for example, on the concentration of the aqueous sodium hydroxide solution and the concentration of the aqueous ammonia.

Other components of the alkaline dry battery of the present invention will be hereinafter described. As for the positive electrode, for example, manganese dioxide serving as the positive electrode active material, graphite serving as the conductive material, the calcium compound as described above and an electrolyte are mixed with a mixer. Thereafter, the mixture is granulated to obtain particles with a certain particle size, which is used as the positive electrode material mixture. The positive electrode material mixture was molded under pressure into a hollow cylindrical shape. Pellets of positive electrode material mixture thus obtained may be used as the positive electrode.

As for the negative electrode, a conventionally known one may be used. For example, zinc or a zinc alloy containing bismuth, indium, aluminum, etc. may be used. For the zinc or the zinc alloy, for example, a zinc powder or a zinc alloy powder obtained by gas atomization may be used.

As for the electrolyte, a conventionally known one may be used. For example, an aqueous potassium hydroxide solution etc. may be used. In the case of the aqueous potassium hydroxide solution, taken as an example, a preferable content of potassium hydroxide in the aqueous solution is, for example, 25 to 40 wt%. As for the separator, a conventionally known one may be used. For example, non-woven fabric composed of polyvinyl alcohol fibers, rayon fibers, etc. may be used.

As for the negative electrode, for example, a gelled negative electrode obtained by mixing the negative electrode active material as described above, an electrolyte and a gelling agent and causing the mixture to gel in the conventionally known manner may be used. For example, sodium polyacrylate may be used.

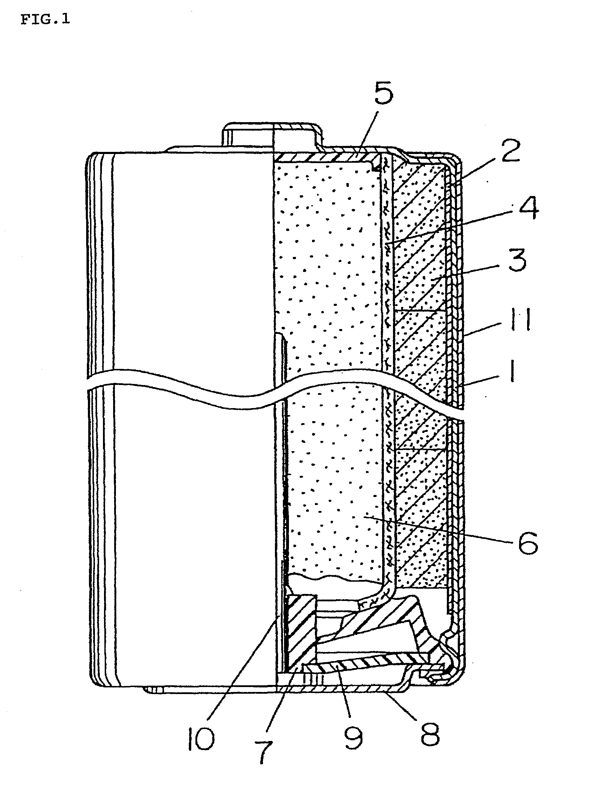

An alkaline dry battery according to one embodiment of the present invention will be hereinafter described with reference to FIG. 1. FIG. 1 is a partially sectional front view of an alkaline dry battery according to one embodiment of the present invention. The alkaline dry battery has cylindrical pellets 3 of positive electrode material mixture, and a gelled negative electrode 6 charged in the hollow formed by the pellets. A separator 4 is interposed between the positive electrode and the negative electrode. A nickel plated layer is disposed on the inner face of a positive electrode case 1, and a graphite coating film 2 is formed on the nickel-plated layer.

The alkaline dry battery is fabricated, for example, in the following manner. First, a plurality of the short cylindrical pellets 3 of positive electrode material mixture are inserted in the interior of the positive electrode case 1, and the pellets 3 of positive electrode material mixture are repressed in the positive electrode case 1. The pellets 3 of positive electrode material mixture are thereby brought into close contact with the inner face of the positive electrode case 1. Next, the separator 4 and an insulating cap 5 are disposed in the hollow formed by the pellets 3 of positive electrode material mixture. Thereafter, an alkaline electrolyte is injected in the hollow for the purpose of wetting the separator 4 and the pellets 3 of positive electrode material mixture. After the injection of the electrolyte, the gelled negative electrode 6 is charged inside the separator 4. Subsequently, a negative electrode current collector 10, which is integrated with a resin sealing plate 7, a bottom plate 8 also serving as a negative electrode terminal and an insulating washer 9, is inserted into the gelled negative electrode 6. The open edge of the positive electrode case 1 is crimped onto the circumference of the bottom plate 8 with the edge of the resin sealing plate 7 interposed therebetween, so that the opening of the positive electrode case 1 is sealed. Lastly, the outer surface of the positive electrode case 1 is covered with an outer label 11, whereby an alkaline dry battery is obtained.

Example

Examples of the present invention will be hereinafter described. The content of the present invention is not limited to these Examples.

<<Experimental Example>>

An AA size alkaline dry battery as shown in FIG. 1 was fabricated.

(1) Preparation of nickel hydroxide powder

A 2.4 mol/l nickel sulfate aqueous solution, a 5 mol/l sodium hydroxide aqueous solution and a 5 mol/l aqueous ammonia were supplied into a reactor. The reactor had stirring blades in the interior thereof and the temperature inside the reactor was maintained at 40°C. Each aqueous solution was continuously supplied at a flow rate of 0.5 ml/min by using a pump. When the pH inside the reactor became constant and the balance between the metal salt concentration and the metal hydroxide particle concentration became constant, i.e., when a steady state is reached, the suspension overflowing therefrom was collected. From this suspension, the precipitate was separated by decantation.

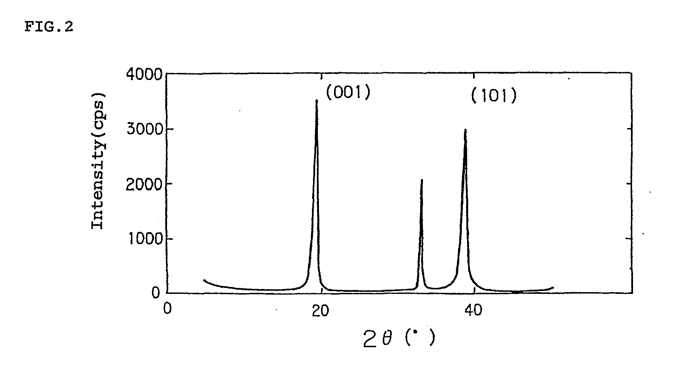

The separated precipitate was subjected to alkaline treatment with an aqueous sodium hydroxide solution having a pH of 13 to 14, so that anions such as sulfate ions contained in the metal hydroxide particles were removed. The resultant substance was washed with water and dried. In such a manner, a nickel hydroxide powder No. 1 was obtained. The nickel hydroxide powder No. 1 thus obtained had a volume basis mean particle size as determined using a laser-diffraction particle size distribution analyzer of 12.3 $\mu$m. The crystal structure of the nickel hydroxide powder thus prepared was measured by powder X-ray diffraction analysis under the following conditions. FIG. 2 shows a typical powder X-ray diffraction pattern of nickel hydroxide powder.

[Measuring apparatus] Powder X-ray diffractometer "RINT1400" available from Rigaku Corporation
[Anticathode] Cu
[Filter] Ni
[Tube voltage] 40 kV
[Tube current] 100 mA
[Sampling angle] 0.02 deg.
[Scanning speed] 3.0 deg./min.
[Divergence slit] 1/2 deg.
[Scattering slit] 1/2 deg.

With respect to the nickel hydroxide powder No. 1, the recorded X-ray diffraction pattern using CuK$\alpha$ ray confirmed the presence of $\beta$-Ni(OH)$_2$ type single phase. The half-width of a peak attributed to the (101) plane present at around $2\theta$ = 37 to 40° was 0.92 deg./$2\theta$, and the half-width of a peak attributed to the (001) plane present at around $2\theta$ = 18 to 21° was 0.90 deg./$2\theta$. These values of the half-width are effective, when the crystallinity of nickel hydroxide powder is controlled in consideration of high rate charge/discharge characteristics of a secondary battery.

(2) Preparation of nickel oxyhydroxide powder

The nickel hydroxide powder prepared in the forgoing was subjected to chemical oxidation treatment to prepare nickel oxyhydroxide. Specifically, the nickel hydroxide powder was added to a 0.5 mol/l sodium hydroxide aqueous solution. Further, an aqueous sodium hypochlorite solution (effective chlorine concentration: 12 wt%) was added in an amount corresponding to the oxidizing equivalent of 1.2. The resultant solution was stirred at a reaction ambient temperature of 45°C for three hours to prepare nickel oxyhydroxide powders No. 1 to 10 and 25 to 29 corresponding to the nickel hydroxide powders No. 1 to 10 and 25 to 29. The nickel oxyhydroxide powder thus obtained was fully washed with water and vacuum-dried at 60°C to obtain a positive electrode active material.

A mean nickel valence of the nickel oxyhydroxide powder was calculated by the following measurements (a) and (b).

(a) Measurement of nickel weight ratio by gravimetric method (dimethylglyoxime method)

To 0.05 g of the nickel oxyhydroxide powder, 10 cm$^3$ of concentrated nitric acid was added, and then heated until the nickel oxyhydroxide powder is dissolved. Subsequently, after 10 cm$^3$ of an aqueous tartaric acid solution was added, ion exchange water was added, so that a mixture solution whose whole volume was adjusted to 200 cm$^3$ was obtained. After the pH of the mixture solution was adjusted using aqueous ammonia and acetic acid, 1 g of potassium bromate was added thereto to oxidize other impurity ions, which can be a cause of error in measurement, into trivalent ions. Subsequently, while this solution was heated and stirred, an ethanol solution of dimethylglyoxime was added thereto, to precipitate nickel (II) ions as a dimethylglyoxime complex compound. This was followed by suction filtration. The precipitate thus formed was collected and dried in an atmosphere of 110°C. The weight of the precipitate was measured. The measured weight was used to determine a weight ratio of nickel contained in the active material powder from the following equation.

$$\text{Nickel weight ratio} = \{\text{weight of precipitate (g)} \times 0.2032\} / \{\text{sample weight of positive electrode active material powder (g)}\}$$

(b) Measurement of nickel ions by oxidation-reduction titration

To 0.2 g of the nickel oxyhydroxide powder, 1 g of potassium iodide and 25 cm$^3$ of sulfuric acid were added, and then sufficiently stirred until they are completely dissolved. In this process, nickel ions having a high valence oxidized potassium iodide into iodine, and the nickel ions themselves were reduced to divalent ions. After the resultant solution was allowed to stand for 20 minutes, an aqueous acetic acid-ammonium acetate solution serving as a pH buffer, and ion exchange water were added thereto to terminate the reaction. The amount of formed and released iodine was determined by titration with a 0.1 mol/l sodium thiosulfate aqueous solution. The titer thus determined reflects the amount of metal ions (amount of nickel ions) having a valence greater than bivalence as described above. A mean nickel valence of the nickel oxyhydroxide powder was then determined using the weight of nickel ions and the nickel weight ratio obtained in (a).

The nickel oxyhydroxide powder prepared in the foregoing, a manganese dioxide powder, graphite, and an electrolyte were mixed in a weight ratio of 50:50:6.5:1. Further, as a calcium compound, calcium hydroxide A having an iron element content of 21 ppm was added such that the amount thereof was 5 mol% relative to the total amount of the nickel oxyhydroxide and the manganese dioxide. These were homogeneously mixed together with a mixer to obtain particles with a certain particle size, whereby a positive electrode material mixture was obtained. The positive electrode material mixture was molded under pressure into a hollow cylindrical shape. Pellets of positive electrode material mixture thus obtained were used as a positive electrode. In addition, an aqueous 40 wt% potassium hydroxide solution was used as the electrolyte.

For the negative electrode, a gelled negative electrode obtained by mixing a gelling agent (sodium polyacrylate), the electrolyte and a negative electrode active material to gel the mixture in the conventional manner was used. For the negative electrode active material, a zinc alloy powder obtained by dissolving 250 ppm of bismuth, 250 ppm of indium and 35 ppm of aluminum in molten zinc and atomizing the resultant molten material was used. For the separator, non-woven fabric composed of polyvinyl alcohol fibers and rayon fibers, etc. was used.

(3) Fabrication of alkaline dry battery

An AA size alkaline dry battery having a structure as shown in FIG. 1 was fabricated. First, a plurality of the hollow cylindrical pellets 3 of positive electrode material mixture were inserted into the positive electrode case 1. The pellets were repressed in the positive electrode case 1 to bring them into close contact with the inner face of the positive electrode case 1. Next, after the separator 4 and the insulating cap 5 were disposed inside the pellets 3 of positive electrode material mixture, the electrolyte was injected therein. After the injection of the electrolyte, the gelled negative electrode 6 was charged inside the separator 4. Subsequently, the negative electrode current collector 10, which was integrated with the resin sealing plate 7, the bottom plate 8 also serving as a negative electrode terminal and the insulating washer 9, was inserted into the gelled negative electrode 6. The open edge of the positive electrode case 1 was crimped onto the circumference of the bottom plate 8 with the edge of the resin sealing plate 7 interposed therebetween, so that the opening of the positive electrode case 1 was sealed. Lastly, the outer surface of the positive electrode case 1 was covered with the outer label 11, whereby an alkaline dry battery (Battery No. 1) was fabricated.

Nickel hydroxide powders No. 2 to 10 having different half-widths of the (101) plane or (001) plane were prepared in the same manner as the nickel hydroxide powder No. 1 except that the concentration of the aqueous sodium hydroxide solution and the concentration of the aqueous ammonia were changed. In the nickel hydroxide powder No. 10, only fine particles having a mean particle size of as small as 6.4 $\mu$m were obtained.

Nickel hydroxide powders No. 25 to 29 having different mean particle sizes were prepared in the same manner as the nickel hydroxide powder No. 4 except that the flow rate of the aqueous nickel sulfate solution, the aqueous sodium hydroxide solution and the aqueous ammonia were changed.

The nickel hydroxide powders No. 2 to 10 and 25 to 29 were subjected to measurement using a powder X-ray diffractometer in the same manner as the nickel hydroxide powder No. 1. The results of the measurement are shown in Table 1.

Nickel hydroxide powders No. 30 to 32 were prepared in the same manner as the nickel hydroxide powder No. 4 except that the added amount of aqueous sodium hypochlorite solution (effective chlorine concentration: 12 wt%) was changed to amounts corresponding to the oxidizing equivalent of 0.9 to 1.4.

Batteries No. 2 to 10 and Batteries No. 25 to 32 were fabricated in the same manner as Battery No. 1 except that the nickel hydroxide powders No. 2 to 10 and 25 to 32 prepared in the foregoing were used.

Conventional Battery No. 2 was fabricated in the same manner as Battery No. 4 except that the calcium compound was not added to the positive electrode material mixture.

Batteries No. 11 to 24 were fabricated in the same manner as Battery No. 1 except that the nickel oxyhydroxide powders No. 1 and No. 4 were used and the weight ratio between the nickel oxyhydroxide powder and the manganese dioxide powder contained in the positive electrode active material was changed.

Conventional Battery No. 1 was fabricated in the same manner as Battery No. 1 except that the proportion of the manganese dioxide powder contained in the positive electrode active material was changed to 100 wt% and the calcium compound was not added thereto.

Batteries No. 33 to 38 were fabricated in the same manner as Battery No. 4 except that calcium hydroxide was added to the positive electrode material mixture in an amount of 0.05 to 15 mol% relative to the total amount of the positive electrode active material.

Batteries No. 39 to 48 were fabricated in the same manner as Battery No. 4 except that calcium compounds B to K different in iron element content were added to the positive electrode material mixture. The physical properties, the added amount, etc. in the batteries fabricated in the foregoing are shown in Table 1. Further, the composition and the iron element content in the calcium compounds A to K used are shown in Table 2. The iron element content was measured by ICP emission spectrometry.

[Table 1]

| Battery No. | Calcium hydroxide (mol%) | Iron element content (ppm) | Nickel hydroxide powder No. | nickel oxy-hydroxide powder No. | (101) plane (deg./2θ) | (001) plane (deg./2θ) | Mean particle size (μm) | Mean nickel valence | NiOOH: MnO$_2$ |
|---|---|---|---|---|---|---|---|---|---|
| 1 | 5 | 21 | 1 | 1 | 0.92 | 0.9 | 12.3 | 2.99 | 50:50 |
| 2 | 5 | 21 | 2 | 2 | 0.91 | 0.78 | 12.8 | 3.02 | 50:50 |
| 3 | 5 | 21 | 3 | 3 | 0.87 | 0.62 | 12.6 | 3 | 50:50 |
| 4 | 5 | 21 | 4 | 4 | 0.78 | 0.61 | 11.7 | 3.01 | 50:50 |
| 5 | 5 | 21 | 5 | 5 | 0.61 | 0.59 | 11.6 | 2.99 | 50:50 |
| 6 | 5 | 21 | 6 | 6 | 0.52 | 0.6 | 11.8 | 2.93 | 50:50 |
| 7 | 5 | 21 | 7 | 7 | 0.72 | 0.76 | 12.4 | 2.97 | 50:50 |
| 8 | 5 | 21 | 8 | 8 | 0.7 | 0.68 | 12.3 | 2.98 | 50:50 |
| 9 | 5 | 21 | 9 | 9 | 0.69 | 0.51 | 12.5 | 2.99 | 50:50 |
| 10 | 5 | 21 | 10 | 10 | 0.68 | 0.46 | 6.4 | 2.99 | 50:50 |
| 11 | 5 | 21 | 1 | 1 | 0.92 | 0.9 | 12.3 | 2.99 | 100:0 |
| 12 | 5 | 21 | 1 | 1 | 0.92 | 0.9 | 12.3 | 2.99 | 90:10 |

(continued)

| Battery No. | Calcium hydroxide (mol%) | Iron element content (ppm) | Nickel hydroxide powder No. | nickel oxy-hydroxide powder No. | (101) plane (deg./ 2θ) | (001) plane (deg./ 2θ) | Mean particle size (μm) | Mean nickel valence | NiOOH: MnO$_2$ |
|---|---|---|---|---|---|---|---|---|---|
| 13 | 5 | 21 | 1 | 1 | 0.92 | 0.9 | 12.3 | 2.99 | 80:20 |
| 14 | 5 | 21 | 1 | 1 | 0.92 | 0.9 | 12.3 | 2.99 | 60:40 |
| 15 | 5 | 21 | 1 | 1 | 0.92 | 0.9 | 12.3 | 2.99 | 40:60 |
| 16 | 5 | 21 | 1 | 1 | 0.92 | 0.9 | 12.3 | 2.99 | 20:80 |
| 17 | 5 | 21 | 1 | 1 | 0.92 | 0.9 | 12.3 | 2.99 | 10:90 |
| 18 | 5 | 21 | 4 | 4 | 0.78 | 0.61 | 11.7 | 3.01 | 100:0 |
| 19 | 5 | 21 | 4 | 4 | 0.78 | 0.61 | 11.7 | 3.01 | 90:10 |
| 20 | 5 | 21 | 4 | 4 | 0.78 | 0.61 | 11.7 | 3.01 | 80:20 |
| 21 | 5 | 21 | 4 | 4 | 0.78 | 0.61 | 11.7 | 3.01 | 60:40 |
| 22 | 5 | 21 | 4 | 4 | 0.78 | 0.61 | 11.7 | 3.01 | 40:60 |
| 23 | 5 | 21 | 4 | 4 | 0.78 | 0.61 | 11.7 | 3.01 | 20:80 |
| 24 | 5 | 21 | 4 | 4 | 0.78 | 0.61 | 11.7 | 3.01 | 10:90 |
| 25 | 5 | 21 | 25 | 25 | 0.77 | 0.61 | 6.7 | 2.99 | 50:50 |
| 26 | 5 | 21 | 26 | 26 | 0.76 | 0.61 | 8 | 2.97 | 50:50 |
| 27 | 5 | 21 | 27 | 27 | 0.78 | 0.61 | 14.7 | 2.98 | 50:50 |
| 28 | 5 | 21 | 28 | 28 | 0.78 | 0.6 | 18 | 2.97 | 50:50 |
| 29 | 5 | 21 | 29 | 29 | 0.78 | 0.61 | 21.3 | 3 | 50:50 |
| 30 | 5 | 21 | 4 | 30 | 0.78 | 0.61 | 11.7 | 2.98 | 50:50 |
| 31 | 5 | 21 | 4 | 31 | 0.78 | 0.61 | 11.7 | 2.95 | 50:50 |
| 32 | 5 | 21 | 4 | 32 | 0.78 | 0.61 | 11.7 | 2.92 | 50:50 |
| 33 | 0.05 | 21 | 4 | 4 | 0.78 | 0.61 | 11.7 | 3.01 | 50:50 |
| 34 | 0.1 | 21 | 4 | 4 | 0.78 | 0.61 | 11.7 | 3.01 | 50:50 |
| 35 | 1 | 21 | 4 | 4 | 0.78 | 0.61 | 11.7 | 3.01 | 50:50 |
| 36 | 2.5 | 21 | 4 | 4 | 0.78 | 0.61 | 11.7 | 3.01 | 50:50 |
| 37 | 10 | 21 | 4 | 4 | 0.78 | 0.61 | 11.7 | 3.01 | 50:50 |
| 38 | 15 | 21 | 4 | 4 | 0.78 | 0.61 | 11.7 | 3.01 | 50:50 |
| 39 | 5 | 22 | 4 | 4 | 0.78 | 0.61 | 11.7 | 3.01 | 50:50 |
| 40 | 5 | 200 | 4 | 4 | 0.78 | 0.61 | 11.7 | 3.01 | 50:50 |
| 41 | 5 | 67 | 4 | 4 | 0.78 | 0.61 | 11.7 | 3.01 | 50:50 |
| 42 | 5 | 155 | 4 | 4 | 0.78 | 0.61 | 11.7 | 3.01 | 50:50 |
| 43 | 5 | 0.8 | 4 | 4 | 0.78 | 0.61 | 11.7 | 3.01 | 50:50 |
| 44 | 5 | 120 | 4 | 4 | 0.78 | 0.61 | 11.7 | 3.01 | 50:50 |
| 45 | 5 | 150 | 4 | 4 | 0.78 | 0.61 | 11.7 | 3.01 | 50:50 |
| 46 | 5 | 90 | 4 | 4 | 0.78 | 0.61 | 11.7 | 3.01 | 50:50 |
| 47 | 5(CaO) | 24 | 4 | 4 | 0.78 | 0.61 | 11.7 | 3.01 | 50:50 |

(continued)

| Battery No. | Calcium hydroxide (mol%) | Iron element content (ppm) | Nickel hydroxide powder No. | nickel oxy-hydroxide powder No. | (101) plane (deg./ 2θ) | (001) plane (deg./ 2θ) | Mean particle size (μm) | Mean nickel valence | NiOOH: MnO₂ |
|---|---|---|---|---|---|---|---|---|---|
| 48 | 5(CaO) | 178 | 4 | 4 | 0.78 | 0.61 | 11.7 | 3.01 | 50:50 |
| Con. Bat. 2 | 0 | 0 | 4 | 4 | 0.78 | 0.61 | 11.7 | 3.01 | 50:50 |
| Con. Bat. 1 | 0 | 0 | - | - | - | - | - | - | 0:100 |

[Table 2]

| Calcium compound No. | Chemical formula | Iron element content (ppm) |
|---|---|---|
| A | $Ca(OH)_2$ | 21 |
| B | $Ca(OH)_2$ | 22 |
| C | $Ca(OH)_2$ | 200 |
| D | $Ca(OH)_2$ | 67 |
| E | $Ca(OH)_2$ | 155 |
| F | $Ca(OH)_2$ | 0.6 |
| G | $Ca(OH)_2$ | 110 |
| H | $Ca(OH)_2$ | 150 |
| I | $Ca(OH)_2$ | 90 |
| J | CaO | 24 |
| K | CaO | 178 |

Batteries No. 1 to 38 in the initial state and after storage for 2 weeks at 60°C were continuously discharged at 20°C at a constant power of 1 W, and the duration until the voltage reached a cut-off voltage of 0.9 V was measured to evaluate their heavy load discharge characteristics. To simulate actual use of batteries in digital cameras, the batteries were subjected to a pulse discharge every one hour in which a pulse cycle of 1.5 W for two seconds and 0.65 W for 28 seconds was repeated 10 times. The number of cycles until the voltage reached 1.05 V and the amount of voltage drop at 1.05 V (ΔV) were measured. Tables 1 to 7 show an average measured value of 10 batteries with respect to Batteries No. 2 to 38, assuming that the duration of each discharge of Battery No. 1 is 100.

In addition, with respect to Batteries No. 1 to 38, batteries were forcedly short-circuited and the increase in battery temperature was measured with a thermocouple to obtain a highest temperature reached of battery. Tables 4 to 9 show an average value of the highest reached temperatures of five batteries with respect to Batteries No. 1 to 38. Here, the safety of battery was judged as acceptable if the highest reached temperature of battery upon short-circuit was 150°C or less.

[Table 3]

| Battery No. | Calcium hydroxide (mol%) | Iron element content (ppm) | Nickel hydroxide powder No. | nickel oxy-hydroxide powder No. | (101) plane (deg./2θ) | (001) plane (deg./2θ) | Mean particle size (μm) | Mean nickel valence | NiOOH: $MnO_2$ |
|---|---|---|---|---|---|---|---|---|---|
| 1 | 5 | 21 | 1 | 1 | 0.92 | 0.9 | 12.3 | 2.99 | 50:50 |
| Con. Bat. 2 | 0 | 0 | 4 | 4 | 0.78 | 0.61 | 11.7 | 3.01 | 50:50 |
| 33 | 0.05 | 21 | 4 | 4 | 0.78 | 0.61 | 11.7 | 3.01 | 50:50 |
| 34 | 0.1 | 21 | 4 | 4 | 0.78 | 0.61 | 11.7 | 3.01 | 50:50 |
| 35 | 1 | 21 | 4 | 4 | 0.78 | 0.61 | 11.7 | 3.01 | 50:50 |
| 36 | 2.5 | 21 | 4 | 4 | 0.78 | 0.61 | 11.7 | 3.01 | 50:50 |
| 4 | 5 | 21 | 4 | 4 | 0.78 | 0.61 | 11.7 | 3.01 | 50:50 |
| 37 | 10 | 21 | 4 | 4 | 0.78 | 0.61 | 11.7 | 3.01 | 50:50 |
| 38 | 15 | 21 | 4 | 4 | 0.78 | 0.61 | 11.7 | 3.01 | 50:50 |

[Table 3] (Continued)

| Battery No. | Continuous discharge characteristics (Initial state) Performance index | Continuous discharge characteristics (After storage) Performance index | Pulse intermittent discharge characteristics Performance index | ΔV value (mV) | Battery temperature upon battery short-circuit (°C) |
|---|---|---|---|---|---|
| 1 | 100 | 100 | 100 | 318 | 173 |
| Con. Bat. 2 | 102 | 107 | 112 | 280 | 145 |
| 33 | 103 | 107 | 112 | 280 | 144 |
| 34 | 103 | 109 | 117 | 271 | 123 |
| 35 | 104 | 112 | 120 | 268 | 127 |
| 36 | 106 | 116 | 122 | 266 | 130 |
| 4 | 105 | 115 | 123 | 265 | 132 |
| 37 | 102 | 114 | 121 | 267 | 129 |
| 38 | 93 | 105 | 108 | 267 | 126 |

The battery in which the positive electrode material mixture did not include calcium hydroxide exhibited a small increase in each discharge characteristics and a large increase in battery temperature upon a battery short-circuit, compared with the batteries in which the positive electrode material mixture included calcium hydroxide. Further, as evident from Battery No. 38, when the added amount of calcium hydroxide relative to the total amount of the positive electrode active material exceeded 10 mol%, the heavy load discharge characteristics of battery in the initial state was reduced. This is presumably because that the proportion of the positive electrode active material included in the positive electrode material mixture was lowered.
[Table 4]

| Battery No. | Calcium hydroxide (mol%) | Iron element content (ppm) | Nickel hydroxide powder No. | nickel oxy-hydroxide powder No. | (101) plane (deg./2θ) | (001) plane (deg./2θ) | Mean particle size (μm) | Mean nickel valence | NiOOH: MnO₂ |
|---|---|---|---|---|---|---|---|---|---|
| 1 | 5 | 21 | 1 | 1 | 0.92 | 0.9 | 12.3 | 2.99 | 50:50 |
| 4 | 5 | 21 | 4 | 4 | 0.78 | 0.61 | 11.7 | 3.01 | 50:50 |
| 30 | 5 | 21 | 4 | 30 | 0.78 | 0.61 | 11.7 | 2.98 | 50:50 |
| 31 | 5 | 21 | 4 | 31 | 0.78 | 0.61 | 11.7 | 2.95 | 50:50 |
| 32 | 5 | 21 | 4 | 32 | 0.78 | 0.61 | 11.7 | 2.92 | 50:50 |

[Table 4] (Continued)

| Battery No. | Continuous discharge characteristics (Initial state) Performance index | Continuous discharge characteristics (After storage) Performance index | Pulse intermittent discharge characteristics Performance index | ΔV value (mV) | Battery temperature upon battery short-circuit (°C) |
|---|---|---|---|---|---|
| 1 | 100 | 100 | 100 | 918 | 173 |
| 4 | 105 | 115 | 123 | 265 | 132 |
| 30 | 104 | 115 | 124 | 263 | 133 |
| 31 | 104 | 114 | 121 | 267 | 129 |
| 32 | 94 | 89 | 95 | 324 | 118 |

By using a nickel oxyhydroxide powder having a mean nickel valance of 2.95 or more, the heavy load discharge characteristics of battery in the initial state and after high temperature storage was further improved. This is presumably because that, as a result of a lowered proportion of the nickel hydroxide included in the nickel oxyhydroxide, the discharge of the nickel oxyhydroxide was not inhibited by the nickel hydroxide.

[Table 5]

| Battery No. | Calcium hydroxide (mol%) | Iron element content (ppm) | Nickel hydroxide powder No. | nickel oxy-hydroxide powder No. | (101) plane (deg./2θ) | (001) plane (deg./2θ) | Mean particle size (μm) | Mean nickel valence | NiOOH: MnO₂ |
|---|---|---|---|---|---|---|---|---|---|
| 1 | 5 | 21 | 1 | 1 | 0.92 | 0.9 | 12.3 | 2.99 | 50:50 |
| 25 | 5 | 21 | 25 | 25 | 0.77 | 0.61 | 6.7 | 2.99 | 50:50 |
| 26 | 5 | 21 | 26 | 26 | 0.76 | 0.61 | 8 | 2.97 | 50:50 |
| 4 | 5 | 21 | 4 | 4 | 0.78 | 0.61 | 11.7 | 3.01 | 50:50 |
| 27 | 5 | 21 | 27 | 27 | 0.78 | 0.61 | 14.7 | 2.98 | 50:50 |
| 28 | 5 | 21 | 28 | 28 | 0.78 | 0.6 | 18 | 2.97 | 50:50 |
| 29 | 5 | 21 | 29 | 29 | 0.78 | 0.61 | 21.3 | 3 | 50:50 |

[Table 5] (Continued)

| Battery No. | Continuous discharge characteristics (Initial state) Performance index | Continuous discharge characteristics (After storage) Performance index | Pulse intermittent discharge characteristics Performance index | ΔV value (mV) | Battery temperature upon battery short-circuit (°C) |
|---|---|---|---|---|---|
| 1 | 100 | 100 | 100 | 318 | 173 |
| 25 | 94 | 96 | 104 | 311 | 125 |
| 26 | 106 | 116 | 121 | 264 | 133 |
| 4 | 105 | 117 | 123 | 265 | 132 |
| 27 | 107 | 117 | 124 | 267 | 130 |
| 28 | 105 | 115 | 123 | 265 | 133 |
| 29 | 93 | 93 | 103 | 315 | 121 |

By using a mean particle size of 8 μm to 18 μm, the heavy load discharge characteristics of battery in the initial state and after high temperature storage was further improved. This is presumably because that a mean particle size of 8 μm or more improved the moldability of the positive electrode material mixture; and in addition, a mean particle size of 18 μm or less prevented the reduction in electron conductivity of nickel oxyhydroxide in the final stage of discharge. Presumably, as a result, the increase in the internal resistance of battery was suppressed.

[Table 6]

| Battery No. | Calcium hydroxide (mol%) | Iron element content (ppm) | Nickel hydroxide powder No. | nickel oxy-hydroxide powder No. | (101) plane (deg./2θ) | (001) plane (deg./2θ) | Mean particle size (μm) | Mean nickel valence | NiOOH: MnO$_2$ |
|---|---|---|---|---|---|---|---|---|---|
| 18 | 5 | 21 | 4 | 4 | 0.78 | 0.61 | 11.7 | 3.01 | 100:0 |
| 19 | 5 | 21 | 4 | 4 | 0.78 | 0.61 | 11.7 | 3.01 | 90:10 |
| 20 | 5 | 21 | 4 | 4 | 0.78 | 0.61 | 11.7 | 3.01 | 80:20 |
| 21 | 5 | 21 | 4 | 4 | 0.78 | 0.61 | 11.7 | 3.01 | 60:40 |
| 4 | 5 | 21 | 4 | 4 | 0.78 | 0.61 | 11.7 | 3.01 | 50:50 |
| 22 | 5 | 21 | 4 | 4 | 0.78 | 0.61 | 11.7 | 3.01 | 40:60 |
| 23 | 5 | 21 | 4 | 4 | 0.78 | 0.61 | 11.7 | 3.01 | 20:80 |
| 24 | 5 | 21 | 4 | 4 | 0.78 | 0.61 | 11.7 | 3.01 | 10:90 |
| Con. Bat. 1 | 0 | 0 | – | – | – | – | – | – | 0:100 |

[Table 6] (Continued)

| Battery No. | Continuous discharge characteristics (Initial state) Performance index | Continuous discharge characteristics (After storage) Performance index | Pulse intermittent discharge characteristics Performance index | ΔV value (mV) | Battery temperature upon battery short-circuit (°C) |
|---|---|---|---|---|---|
| 18 | 108 | 116 | 126 | 260 | 179 |
| 19 | 106 | 115 | 126 | 259 | 148 |
| 20 | 105 | 114 | 124 | 261 | 147 |
| 21 | 104 | 115 | 124 | 261 | 138 |
| 4 | 105 | 115 | 123 | 265 | 134 |
| 22 | 104 | 114 | 120 | 268 | 132 |
| 23 | 102 | 109 | 113 | 272 | 129 |
| 24 | 98 | 100 | 92 | 303 | 128 |
| Con. Bat. 1 | 59 | 43 | 50 | 365 | 125 |

By adjusting the weight ratio between the nickel oxyhydroxide and the manganese dioxide to 20:80 to 90:10, each discharge characteristics of battery were significantly improved and the increase in battery temperature upon a battery short-circuit was suppressed. In particular, by adjusting the weight ratio between the nickel oxyhydroxide and the manganese dioxide to 20:80 to 60:40, the increase in battery temperature upon a battery short-circuit was further suppressed.

In Table 7, the data obtained when positive electrode active materials including nickel oxyhydroxide prepared from various types of nickel hydroxide were extracted from Table 1 above were summarized.

[Table 7]

| Battery No. | Calcium hydroxide (mol%) | Iron element content (ppm) | Nickel hydroxide powder No. | nickel oxy-hydroxide powder No. | (101) plane (deg./2θ) | (001) plane (deg./2θ) | Mean particle size (μm) | Mean nickel valence | NiOOH: MnO₂ |
|---|---|---|---|---|---|---|---|---|---|
| 1 | 5 | 21 | 1 | 1 | 0.92 | 0.9 | 12.3 | 2.99 | 50:50 |
| 2 | 5 | 21 | 2 | 2 | 0.91 | 0.78 | 12.8 | 3.02 | 50:50 |
| 3 | 5 | 21 | 3 | 3 | 0.87 | 0.62 | 12.6 | 3 | 50:50 |
| 4 | 5 | 21 | 4 | 4 | 0.78 | 0.61 | 11.7 | 3.01 | 50:50 |
| 5 | 5 | 21 | 5 | 5 | 0.61 | 0.59 | 11.6 | 2.99 | 50:50 |
| 6 | 5 | 21 | 6 | 6 | 0.52 | 0.6 | 11.8 | 2.93 | 50:50 |
| 7 | 5 | 21 | 7 | 7 | 0.72 | 0.76 | 12.4 | 2.97 | 50:50 |
| 8 | 5 | 21 | 8 | 8 | 0.7 | 0.68 | 12.3 | 2.98 | 50:50 |
| 9 | 5 | 21 | 9 | 9 | 0.69 | 0.51 | 12.5 | 2.99 | 50:50 |
| 10 | 5 | 21 | 10 | 10 | 0.68 | 0.46 | 6.4 | 2.99 | 50:50 |
| 11 | 5 | 21 | 1 | 1 | 0.92 | 0.9 | 12.3 | 2.99 | 100:0 |
| 12 | 5 | 21 | 1 | 1 | 0.92 | 0.9 | 12.3 | 2.99 | 90:10 |
| 13 | 5 | 21 | 1 | 1 | 0.92 | 0.9 | 12.3 | 2.99 | 80:20 |
| 14 | 5 | 21 | 1 | 1 | 0.92 | 0.9 | 12.3 | 2.99 | 60:40 |
| 15 | 5 | 21 | 1 | 1 | 0.92 | 0.9 | 12.3 | 2.99 | 40:60 |
| 16 | 5 | 21 | 1 | 1 | 0.92 | 0.9 | 12.3 | 2.99 | 20:80 |
| 17 | 5 | 21 | 1 | 1 | 0.92 | 0.9 | 12.3 | 2.99 | 10:90 |
| 18 | 5 | 21 | 4 | 4 | 0.78 | 0.61 | 11.7 | 3.01 | 100:0 |
| 19 | 5 | 21 | 4 | 4 | 0.78 | 0.61 | 11.7 | 3.01 | 90:10 |
| 20 | 5 | 21 | 4 | 4 | 0.78 | 0.61 | 11.7 | 3.01 | 80:20 |
| 21 | 5 | 21 | 4 | 4 | 0.78 | 0.61 | 11.7 | 3.01 | 60:40 |
| 22 | 5 | 21 | 4 | 4 | 0.78 | 0.61 | 11.7 | 3.01 | 40:60 |
| 23 | 5 | 21 | 4 | 4 | 0.78 | 0.61 | 11.7 | 3.01 | 20:80 |
| 24 | 5 | 21 | 4 | 4 | 0.78 | 0.61 | 11.7 | 3.01 | 10:90 |
| Con. Bat. 1 | 0 | 0 | – | – | – | – | – | – | 0:100 |
| Con. Bat. 2 | 0 | 0 | 4 | 4 | 0.78 | 0.61 | 11.7 | 3.01 | 50:50 |

[Table 7] (Continued)

| Battery No. | Continuous discharge characteristics (Initial state) | Continuous discharge characteristics (After storage) | Pulse intermittent discharge characteristics | | Battery temperature upon battery short-circuit (°C) |
|---|---|---|---|---|---|
| | Performance index | Performance index | Performance index | ΔV value (mV) | |
| 1 | 100 | 100 | 100 | 318 | 173 |
| 2 | 101 | 101 | 105 | 296 | 170 |
| 3 | 102 | 102 | 107 | 299 | 157 |
| 4 | 105 | 115 | 123 | 265 | 132 |
| 5 | 104 | 116 | 124 | 264 | 124 |
| 6 | 86 | 82 | 91 | 327 | 112 |
| 7 | 92 | 99 | 107 | 291 | 118 |
| 8 | 104 | 115 | 121 | 267 | 135 |
| 9 | 104 | 116 | 126 | 260 | 129 |
| 10 | 91 | 95 | 96 | 322 | 110 |
| 11 | 108 | 97 | 103 | 312 | 202 |
| 12 | 104 | 95 | 106 | 301 | 195 |
| 13 | 103 | 100 | 102 | 315 | 183 |
| 14 | 100 | 100 | 100 | 317 | 177 |
| 15 | 100 | 101 | 101 | 314 | 172 |
| 16 | 95 | 94 | 91 | 326 | 165 |
| 17 | 88 | 80 | 82 | 348 | 134 |
| 18 | 108 | 116 | 126 | 260 | 179 |
| 19 | 106 | 115 | 126 | 259 | 148 |
| 20 | 105 | 114 | 124 | 261 | 147 |
| 21 | 104 | 115 | 124 | 261 | 138 |
| 22 | 104 | 114 | 120 | 268 | 132 |
| 23 | 102 | 109 | 113 | 272 | 129 |
| 24 | 98 | 100 | 92 | 303 | 128 |
| Con. Bat. 1 | 59 | 43 | 50 | 365 | 125 |
| Con. Bat. 2 | 102 | 107 | 112 | 280 | 145 |

As is evident from Batteries No. 4, 5, 8 and 9, in the case where nickel hydroxide having a half-width of 0.6 to 0.8 deg./2θ of the (101) plane and a half-width of 0.5 to 0.7 deg./2θ of the (001) plane in powder X-ray diffraction of nickel hydroxide powder was used, it was possible to suppress the progress of polarization during heavy load pulse discharge and significantly improve the heavy load discharge characteristics after high temperature storage, while maintaining excellent heavy load discharge characteristics. Moreover, in Batteries No. 4, 5, 8 and 9, the increase in battery temperature upon a battery short-circuit was suppressed.

Compared with Conventional Battery No. 1 in which the positive electrode active material did not include a nickel oxyhydroxide powder, in each battery of Battery No. 1 and Batteries No. 11 to 17, favorable heavy load continuous discharge characteristics and pulse discharge characteristics were obtained. However, in these batteries, the half-width of the (101) plane in powder X-ray diffraction of the nickel hydroxide powder used was 0.92 deg./2θ and the half-width of the (001) plane was 0.90 deg./2θ, the foregoing each discharge characteristics were not improved significantly, and the highest reached temperature of battery upon a battery short-circuit was high.

Further, 100 batteries each from Battery No. 4 and Batteries No. 39 to 48 were stored for six months in a room temperature atmosphere. Thereafter, the open-circuit voltage of each battery was measured to check the number of batteries whose open-circuit voltage was dropped. The results are shown in Table 8.

[Table 8]

| Calcium compound No. | Chemical formula | Iron element content (ppm) | Amount of generated gas (ml) |
|---|---|---|---|
| A | $Ca(OH)_2$ | 21 | 0.02 |
| B | $Ca(OH)_2$ | 22 | 0.05 |
| C | $Ca(OH)_2$ | 200 | 0.53 |
| D | $Ca(OH)_2$ | 67 | 0.03 |
| E | $Ca(OH)_2$ | 155 | 0.24 |
| F | $Ca(OH)_2$ | 0.6 | 0.04 |
| G | $Ca(OH)_2$ | 110 | 0.05 |
| H | $Ca(OH)_2$ | 150 | 0.07 |
| I | $Ca(OH)_2$ | 90 | 0.05 |
| J | CaO | 24 | 0.03 |
| K | CaO | 178 | 0.39 |

The results found that only in Batteries No. 40, 42 and 48, to which the calcium compounds C, E and K having an iron element content exceeding 150 ppm were added, respectively, the voltage drop after storage at room temperature was observed.

[Evaluation Test (Simulation)]

An influence of the iron element contained in a calcium compound added to the positive electrode material mixture, to the battery characteristics through the negative electrode was examined by adding a calcium compound directly to the negative electrode. Specifically, in the alkaline dry battery of the present invention, an influence of the iron contained in a calcium compound included in the positive electrode when the iron moved in the dry battery until it reached the negative electrode was examined by adding a calcium compound directly to the negative electrode.

To 100 g of gelled negative electrode composed of sodium polyacrylate, an alkaline electrolyte and a zinc alloy powder containing 250 ppm of Bi, 250 ppm of In and 35 ppm of Al, 1 g each of the calcium compounds A to K different in iron element content measured by ICP emission spectrometry was added separately, and then stirred sufficiently. Then, 10 g each of the gelled negative electrodes mixed with these calcium compounds was sampled separately in a glass measuring apparatus and stored in a 45°C atmosphere for three days. The generated amount of gas after storage was measures. The relation between the iron element content in the calcium compound and the amount of generated gas are shown in Table 9.

[Table 9]

| Calcium compound No. | Battery No. | Number of batteries whose voltage dropped (pcs) |
|---|---|---|
| A | 4 | 0 |
| B | 39 | 0 |
| C | 40 | 4 |
| D | 41 | 0 |
| E | 42 | 1 |
| F | 43 | 0 |
| G | 44 | 0 |
| H | 45 | 0 |
| I | 46 | 0 |

(continued)

| Calcium compound No. | Battery No. | Number of batteries whose voltage dropped (pcs) |
|---|---|---|
| J | 47 | 0 |
| K | 48 | 2 |

As evident from Table 9, when the iron element content in the calcium compound exceeded 150 ppm, the amount of gas generated from the negative electrode was sharply increased.

Industrial Applicability

The present invention is applicable to an alkaline dry battery required to have improved discharge characteristics and heavy load discharge characteristics in the initial state and after high temperature storage and a further improved safety.

**Claims**

1.  An alkaline dry battery comprising: a positive electrode including a nickel oxyhydroxide powder and a manganese dioxide powder as positive electrode active materials, and including graphite as a conductive material; a negative electrode including zinc or a zinc alloy as a negative electrode active material; a separator interposed between said positive electrode and said negative electrode; a negative electrode current collector inserted in said negative electrode; an aqueous alkaline solution included in said separator; a battery case housing said positive electrode, said negative electrode, said separator, said negative electrode current collector and said aqueous alkaline solution; a sealing member for sealing an opening of said battery case, wherein
said positive electrode includes a calcium compound in an amount of 0.1 to 10 mol% relative to a total amount of said positive electrode active material, and the content of iron element in said calcium compound is 150 ppm or less.

2.  The alkaline dry battery in accordance with claim 1, wherein said calcium compound is a calcium oxide or calcium hydroxide.

3.  The alkaline dry battery in accordance with claim 1 or 2, wherein said nickel oxyhydroxide powder has a mean nickel valence of 2.95 or more.

4.  The alkaline dry battery in accordance with any one of claims 1 to 3, wherein said nickel oxyhydroxide powder has a mean particle size of 8 to 18 $\mu$m.

5.  The alkaline dry battery in accordance with any one of claims 1 to 4, wherein the weight ratio between said nickel oxyhydroxide powder and said manganese dioxide powder is 20:80 to 90:10.

6.  The alkaline dry battery in accordance with any one of claims 1 to 5, wherein the weight ratio between said nickel oxyhydroxide powder and said manganese dioxide powder is 20:80 to 60:40.

7.  The alkaline dry battery in accordance with any one of claims 1 to 6, wherein said nickel oxyhydroxide powder is a powder obtained by oxidizing a nickel hydroxide powder having a half-width of 0.6 to 0.8 deg./2θ of the (101) plane and a half-width of 0.5 to 0.7 deg./2θ of the (001) plane in powder X-ray diffraction.

FIG.1

FIG.2

## INTERNATIONAL SEARCH REPORT

| | |
|---|---|
| | International application No. |
| | PCT/JP2006/316681 |

| | |
|---|---|
| A. CLASSIFICATION OF SUBJECT MATTER | |
| *H01M4/06*(2006.01)i, *H01M4/52*(2006.01)i, *H01M4/62*(2006.01)i, *H01M6/08* (2006.01)i | |

According to International Patent Classification (IPC) or to both national classification and IPC

| B. FIELDS SEARCHED |
|---|
| Minimum documentation searched (classification system followed by classification symbols) |
| H01M4/06, H01M4/52, H01M4/62, H01M6/08 |

| Documentation searched other than minimum documentation to the extent that such documents are included in the fields searched | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

| Electronic data base consulted during the international search (name of data base and, where practicable, search terms used) |
|---|
| |

### C. DOCUMENTS CONSIDERED TO BE RELEVANT

| Category* | Citation of document, with indication, where appropriate, of the relevant passages | Relevant to claim No. |
|---|---|---|
| Y A | JP 2001-15106 A (Matsushita Electric Industrial Co., Ltd.), 19 January, 2001 (19.01.01), Claims 1 to 4; Par. Nos. [0007] to [0009], [0017] to [0018], [0040] & EP 1121723 A1 & US 6566009 B1 & WO 2000/021151 A1 | 1-6 7 |
| Y | JP 2003-17079 A (Toshiba Battery Co., Ltd.), 17 January, 2003 (17.01.03), Par. Nos. [0017], [0024], [0033] to [0034] (Family: none) | 1-6 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 November, 2006 (15.11.06) | 05 December, 2006 (05.12.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No.

PCT/JP2006/316681

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2005-71991 A  (Matsushita Electric Industrial Co., Ltd.), 17 March, 2005 (17.03.05), Par. Nos. [0001], [0026], [0031] to [0032], [0034] & EP 1681737 A1        & WO 2005/015666 A1 | 3-4 |

Form PCT/ISA/210 (continuation of second sheet) (April 2005)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000048827 A

- JP 2001015106 A